# EUROPEAN PATENT APPLICATION

(11) **EP 3 273 295 A1**
(43) Date of publication of application: **24.01.2018**
(21) Application number: 16764273.5
(22) Date of filing: 08.03.2016
(51) Int. Cl.: G02C 7/16, G02C 11/00

(54) **GLASSES FOR ALIGNING THE CERVICAL VERTEBRAE**

(30) Priority: 16.03.2015 ES 201530332
(71) Applicant: Vazquez Gonzalez, Carlos, 28001 Madrid (ES); Ferrer Galotto, Amparo, 28001 Madrid (ES)
(72) Inventor: VAZQUEZ GONZALEZ, Carlos, 28001 Madrid (ES)
(74) Representative: Del Valle Valiente, Sonia
(86) International application number: PCT/ES2016/070146
(87) International publication number: WO 2016/146866

(57) **Abstract**

The invention relates to a device for allowing the correct positioning of the head in relation to the cervical vertebrae, preventing cervical injuries. To this end, the invention relates to the addition of horizontal occlusion means (5) to a conventional glasses structure, said means affecting a percentage of the surface of said devices, proportionally to the angle that the patient must correct in order to correctly align the head with the cervical vertebrae. The invention also comprises levelling means on the front and on at least one sidepiece so as to ensure correct positioning both in the vertical profile plane and the vertical elevation plane, so as to obtain an optimum posture.

## Description

### OBJECT OF THE INVENTION

The present invention relates to a pair of glasses with the special characteristic that they present a percentage of horizontal occlusion at either the top or bottom, on the frame itself or on the lenses, in order to correct the posture of the patient, which is to say, in order to provide orthotic training, achieving postural education with self-correction of bending of the neck and protrusion of the head, thus keeping the head aligned with the cervical vertebrae and therefore improving physical and emotional health.

The objective of the invention is therefore to provide a comfortable feeling to users, modifying functional aspects of the neuro-muscular-skeletal system, effectively preventing cervicalgia and deformities frequently caused by poor postural habits and the use of new technologies; improving breathing, and strengthening self-esteem, because when the gaze is kept horizontal, it indicates security, cordiality, and that the person is open to communication, and it improves image when walking.

The object of the invention is also to equip glasses with a levelling means, which makes it possible to ensure correct vertical positioning of the user's head.

The invention therefore falls into the scope of devices for the prevention or correction of possible cervical injuries.

Consequently, the field of application of the present invention is therefore part of the area of the industry engaged in the manufacture of eyeglass frames and lenses for the purpose of orthotics as training for postural hygiene of the neck, preventing muscular-skeletal symptoms, so they will be distributed in registered healthcare centres, services, and establishments, such as pharmacies, orthopaedics shops, optometrist, etc. The invention may likewise be applied to corrective lenses for visual purposes.

### BACKGROUND OF THE INVENTION

In the area of practical application of the invention, it is customary for users, due to new technologies, to tilt their heads excessively to view certain devices, such as mobile phones, tablets, and similar devices, so that the head is out of alignment with the cervical vertebrae, causing pain or even cervical injuries if this type of incorrect posture is maintained for too long.

A similar situation arises with people who need corrective lenses, so that when they focus on images, they tend to tilt their head forward and/or adopt postures that are clearly harmful.

Lastly, it is important to note the tendency to shift the head forward with respect to the torso when sitting in front of a computer, which causes an increase in the weight of the head, with the consequent muscular-skeletal pain/discomfort.

Although the use of occlusion elements on glasses and similar elements for the treatment of myopia and other visual impairments is known, these elements are always aimed at the prevention and treatment of vision, but not the training and correction of the alignment of the head with the cervical vertebrae of the users, as in this case, so they are structured differently and do not propose the same type of occlusion or means to regulate it that are described below.

### DESCRIPTION OF THE INVENTION

The disclosed device was conceived to solve the problem described above in a simple but effective manner.

To do this, and more specifically, the proposed glasses, starting with a conventional structure of any type of glasses (frame), regardless of whether or not they are prescription glasses, or have been treated to protect against the sun, present the specific characteristic that they incorporate horizontally occluded sections, in other words, sections that that do not allow vision through them, either at the top or bottom, depending on the required correction in the angle of the patient's head with respect to the cervical vertebrae.

Consequently, the percentage of the glasses to be occluded with respect to the total area of the front of the frame or the surface of the lens is determined in the specific case of each patient. The correlation between the angle of cervical bending and the % of occlusion of the device, whether at the top or bottom, has been verified experimentally, such that the user will automatically correct the incorrect cervical bending; merely for the purposes of example, with a horizontal upper occluded area of 45%, the bending of the patient's neck is corrected by 45º, for an occlusion of 60%, an angle of 60°, making it possible to conclude that there is a linear relationship between the % of occlusion and the cervical angle to be corrected.

This horizontal occlusion, either upper or lower, may be obtained in very different ways, either with the occlusion in the frame itself with the expansion of the corresponding zone of the rim, or by constructing independent elements, acting as thin opaque sheets equipped with a means to secure them to the frame by clipping, magnet, or any other means, or directly on the lenses, by means of colouring or grinding of the lenses, with any type of adhesive, such that the sheets may be substituted with others with larger or smaller dimensions, in other words, with a larger or smaller percentage of horizontal occlusion, in order to personalize the existing glasses or frames to the specific needs in each case.

According to another one of the characteristics of the invention, and in order to ensure correct positioning of the head of the user, in regard to an imaginary vertical elevation plane as well as to an imaginary vertical profile plane, the frame has been designed to include a means to level it.

These levelling means may take a variety of different forms, such as bubble levels, laser levels, or any other existing type of level, so that the glasses will preferably include two means of levelling, one associated with the sidepieces and the other associated with the frame front, in order to achieve perfect positioning of the user's head. These elements may likewise be removable, to adapt to existing frames, or may be included during the manufacture of the glasses, with this not affecting the essence of the invention.

Lastly, an embodiment variation has been designed that includes the two characteristics described above in a single system, in which the frame itself or the lenses have a double wall, creating a sealed internal chamber, which is filled with a coloured liquid, affecting the % of the area that is occluded that is deemed necessary in the specific case of each individual, such that the nature of the occluding liquid itself allows it to be used as a level, ensuring perfect horizontal orientation of the imaginary axis that connects the centre points of the patient's pupils.

This creates a device that can be adapted to the needs of each patient, that is extremely simple by highly effective, that makes it possible to re-educate patients to adopt the correct posture and avoid cervical injuries.

### DESCRIPTION OF THE DRAWINGS

To complement the description below, in order to provide a better understanding of the characteristics of the invention, in accordance with a preferred practical embodiment of the invention, a set of drawings is included as an integral part of the description, in which the following elements have been represented for the purposes of illustration but not limitation:

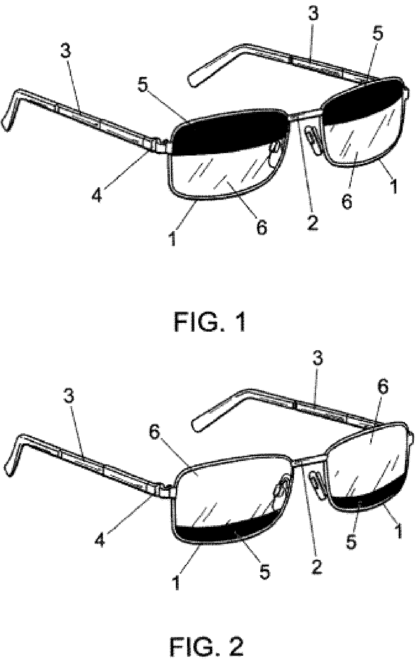

Figure 1.- Shows a drawing that corresponds to a perspective view of a pair of glasses constructed according to the object of the invention.
Figure 2.- Shows a view similar to that of figure 1, but corresponding to a variant of the embodiment in which the glasses are equipped with lower horizontal occlusion.
Figure 3.- Shows a view similar to that of figure 1, but with the glasses including levelling means, in order to provide optimum positioning of the user's head.
Figure 4.- shows a view.

### PREFERRED EMBODIMENT OF THE INVENTION

As shown in the aforementioned figures, the glasses of the invention begin with the conventional structure of any type of eyeglass frame, which consist of two rims (1) or means to secure lenses (6), joined by the corresponding bridge (2), and which has the classic sidepieces (3) with their means of hinging (4), with the lenses including or not including treatments against the sun, or being prescription or non-prescription lenses.

According to the essence of the invention, the glasses of the invention present the specific characteristic that they incorporate an area of horizontal occlusion (5), either upper and/or lower, that affects a percentage of the area of these devices, proportional to the angle to which the positioning of the patient's head is to be corrected with respect to the vertical, in order to prevent incorrect postures, especially when using computers, mobile phones, tablets, etc. for long periods during the day.

This horizontal occlusion (5) may take many different forms, and may be movable or fixed, or in other words, may form part of the glasses themselves during manufacture or be adapted to existing glasses.

The percentage of the area occluded horizontally with respect to the total surface area of the glasses is determined, as mentioned above, by the specific needs of each patient, with these occlusions taking the form of simple tinting on the surface of the lenses, ground areas, or taking the form of movable elements, such as adhesive strips, strips equipped with a means to fix them to the frame or the lenses, etc., or may form an integral part of the frame, or with a supplement to the frame, with this not affecting the essence of the invention.

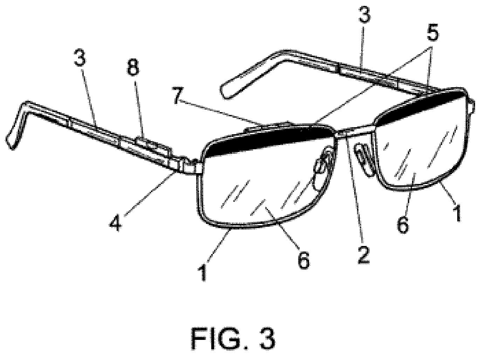

According to another characteristic of the invention, and as shown in figure 3, to ensure correct positioning of the patient's head, in both the vertical profile plane as well as the vertical elevation plane, the glasses have been designed to be equipped with a levelling means (7-8) on both the frame front and sidepieces (3), such as bubble levels, laser levels, or any other known type of level, which may be within view of the user, in order to indicate that the position adopted by the user is correct, in other words, the position in which the head is perfectly aligned with the cervical vertebrae.

Lastly, and according to an embodiment variation not shown in the figures, the occlusion means may directly define the means of levelling the frame or lenses of the frame by means of a double wall, in which a sealed internal chamber is created, which is filled with a coloured liquid, affecting the % of the area that is deemed necessary in the specific case of each individual, such that the nature of the occluding liquid itself allows it to be used as a level, ensuring perfect horizontal orientation of the imaginary axis that connects the centre points of the patient's pupils. And in addition, the sidepiece will be equipped with a sealed chamber filled with a liquid that is used solely as a levelling means.

Obviously, the glasses may be made of any suitable material or combination of materials, with this not affecting the essence of the invention.

According to a series of improvements that can be introduced into the glasses of the invention, the occlusion means and/or levelling means (7-8) may include electronic means. Ideally, said electronic means, in the case of levelling means (7-8) would comprise any inertial sensor (that allows the measurement of inertial movements) and preferably an electronic accelerometer (10) and/or gyroscope (11), as well as a processor (12) associated with said inertial sensors. Likewise, the levelling means will comprise an indicator (13) and a power supply (14), so that the processor (12) - a microprocessor - will interpret the signals from the inertial sensors, and if any physiological misalignment of the vertebrae is detected, the indicator will be activated so that the user can rectify his posture. In addition, the electronic means may also comprise a data memory (16) that makes it possible to monitor and store the positions adopted to later transfer them for analysis and/or monitoring by means of an application that can be installed on a computer, tablet, smartphone, or similar.

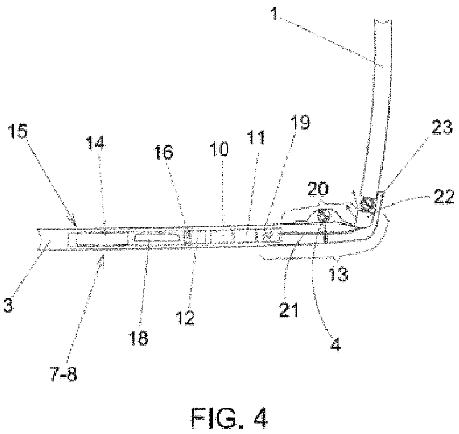

The inertial sensors (in this preferred embodiment, the electronic accelerometer (10) and gyroscope (11)), and even the processor (12) and/or memory (16) may be implemented in a single inertial measurement unit (IMU) that are typically used in smartphones, which are very low cost and usually incorporate a compass (magnetic sensors, not shown in the figure). In any case, these elements will be encapsulated in a housing (15) that may be added to or integrated into at least one of the sidepieces (3) and/or the rims (1) and/or bridge (2) of the glasses. Specifically, figure 4 shows this housing (15) is integrated into one of the sidepieces (3) of the glasses, using a three-axis gyroscope (11) and/or accelerometer (10).

The power supply (14) would comprise a rechargeable battery, with an external connection (18) (micro or nano USB®, wireless, etc.) to recharge the battery and/or for transferring the data collected by the processor (12) in real time and/or stored in the memory (16) at a later time.

In regard to the indicator (13), this will preferably comprise a light source (19) (an LED, for example) and a diffuser (20) of the light generated by the light source (19) towards the user's field of vision. In addition or alternatively, the indicator may comprise a buzzer or any other acoustic means.

The diffuser (20) in the example shown in figure 4, comprises at least one fibre optic filament (21) that runs from the light source (19) to a clear portion (22) located within the user's peripheral field of view, such as on the temples (23) of the rims (1) of the glasses, where the sidepieces (3) originate, before the hinging means (4), with the flexibility of the optical fibre collaborating in the bending of these hinging means.

In regard to the concrete application of the electronic occlusion means, these will ideally be implemented by means of an electronic liquid crystal blocker, not shown, controlled by a microchip integrated into each lens. These electronic liquid crystal blockers will selectively block the passage of light to make them opaque, in the desired percentages, and they will likewise be powered by a battery, ideally a rechargeable battery. They may also be combined with the electronic levelling means and be powered by the power supply (14) - and may even modify the opaque percentage of the portions in case of deviation from the correct physiological position to force the user more firmly to recover the correct position.

## Claims

1. Glasses for aligning the cervical vertebrae, which, based on the conventional structure of any type of glasses, are **characterised in that** (6) they present an upper and/or lower horizontal occlusion means (5), in which the occluded percentage of the front surface area is proportional to the angle of cervical bending to be corrected so that the user keeps his head perfectly aligned with the cervical vertebrae, with the occlusion means taking the form of an element that defines an opaque horizontal surface in correspondence with the eyeglass lenses, and levelling means (8) that are installed on at least one of the sidepieces of the frame.

2. Glasses for aligning the cervical vertebrae, according to claim 1, **characterised in that** the occlusion means (5) are removable.

3. Glasses for aligning the cervical vertebrae, according to claim 1, **characterised in that** the occlusion means (5) are not removable, forming part of the device itself.

4. Glasses for aligning the cervical vertebrae, according to any of claims 1 to 3, **characterised in that** the levelling means (7) are also established on the frame front thereof.

5. Glasses for aligning the cervical vertebrae, according to claims 1 to 4, **characterised in that** the frame front and frame sidepieces, as well as the lenses, have a double wall, which creates a sealed internal chamber partially filled with a coloured liquid, which functions as both the occlusion element and/or levelling means.

6. Glasses for aligning the cervical vertebrae, according to any of the preceding claims, **characterised in that** the occlusion and/or levelling means (7-8) comprise electronic means.

7. Glasses for aligning the cervical vertebrae, according to claim 6, **characterised in that** the electronic means comprise a series of inertial sensors, a processor (12) associated with said inertial sensors, an indicator (13), and a power supply (14).

8. Glasses for aligning the cervical vertebrae, according to claim 7, **characterised in that** the inertial sensors comprise an electronic accelerometer (10) and/or gyroscope (11).

9. Glasses for aligning the cervical vertebrae, according to claims 7 or 8, **characterised in that** the electronic means also comprise a data memory (16).

10. Glasses for aligning the cervical vertebrae, according to any of the claims 7 to 9, **characterised in that** the inertial sensors are implemented in an inertial measurement unit.

11. Glasses for aligning the cervical vertebrae, according to any of the claims 7 to 10, **characterised in that,** at least, the inertial sensors, processor (12) and power supply (14) are encapsulated in a housing (15) that may be added to or integrated into at least one of the sidepieces (3) and/or the rims (1) and/or bridge (2) of the glasses.

12. Glasses for aligning the cervical vertebrae, according to any of the claims 7 to 11, **characterised in that** the power supply (14) comprises a rechargeable battery.

13. Glasses for aligning the cervical vertebrae, according to any of the claims 7 to 12, **characterised in that** the electronic means also comprise an external connection (18) for transferring data and/or recharging the power supply (14).

14. Glasses for aligning the cervical vertebrae, according to any of the claims 7 to 13, **characterised in that** the indicator (13) comprises a light source (19) and a diffuser (20) of the light generated by the light source (19) to the field of view of the user.

15. Glasses for aligning the cervical vertebrae, according to claim 14, **characterised in that** the diffuser (20) comprises at least one fibre optic filament (21) that runs from the light source (19) to a clear portion (22) located within the user's peripheral field of view.

16. Glasses for aligning the cervical vertebrae, according to claim 15, **characterised in that** the clear portion (22) is arranged on the temples (23) of the rims (1) of the glasses.

17. Glasses for aligning the cervical vertebrae, according to any of the claims 7 to 16, **characterised in that** the occlusion means comprise an electronic liquid crystal blocker controlled by a microchip, integrated into the lens, with selective blocking of the passage of light to occlude a percentage thereof.
